# EUROPEAN PATENT SPECIFICATION

(11) **EP 0 685 671 B1**
(45) Date of publication and mention of the grant of the patent: **10.05.2000**
(21) Application number: 95300372.0
(22) Date of filing: 20.01.1995
(51) Int. Cl.: F16K 31/08, F16K 31/40

(54) **A fluid supply valve**
Fluidventil
Soupape pour fluides

(30) Priority: 31.05.1994 KR 1258894; 31.05.1994 KR 1259794
(43) Date of publication of application: 06.12.1995
(73) Proprietor: DAEWOO ELECTRONICS CO., LTD, Seoul (KR)
(72) Inventor: Kim, Jinsoo, Incheon (KR)
(74) Representative: Needle, Jacqueline

(56) References cited:
- EP-A- 0 219 572
- DE-A- 2 261 278
- PATENT ABSTRACTS OF JAPAN vol. 9, no. 272 (M-425) (1995) 30 October 1985 & JP-A-60 116 980 (MATSUSHITA) 24 June 1985
- PATENT ABSTRACTS OF JAPAN vol. 8, no. 230 (M-333) (1667) 23 October 1984 & JP-A-59 110 983 (MITSUBISHI) 27 June 1984

## Description

The present invention relates to a water supply valve for a washing machine.

In conventional water supply valves for washing machines, the valve is opened by way of a solenoid. However, an actuator rod thereof has to be held in the open position against the force of a spring while water is supplied. This means that the electric power supply to the solenoid must be continued while water is supplied. Accordingly, the electric power consumption is high. Further, the continuous application of voltage to the solenoid during water supply can cause problems, for example, because of the heat generated.

EP-A-219572 describes a bistable fluid supply valve which can be held in either end position without power.

Patent Abstracts of Japan, Vol 9, No. 272, (M-425) (1995) describes a fluid supply valve comprising:
a valve body having a reservoir defined therein;
a water introducing tube interconnected to the reservoir to introduce water thereinto;
a water supply tube having a first end interconnected to the reservoir, and a second end for interconnection to a washing machine;
an actuator rod movable up and down in the reservoir;
a bellows disposed in the reservoir and movable up and down in the reservoir in accordance with the movement of the actuator rod,
first means for elevating the actuator rod;
second means for applying a variable upward attractive force to the actuator rod; and
third means for applying a constant downward biasing force to the actuator rod.

The present invention seeks to provide a water supply valve for a washing machine which can be held in the open position without the supply of electric power.

According to the present invention, a fluid supply valve as defined above is arranged for use as a water supply valve for a washing machine and is characterised
in that said water supply valve further comprises fourth means for lowering the actuator rod;
in that said third means applies a constant downward biasing force to the actuator rod which is larger than the upward attractive force when the actuator rod is at its lowermost position, and which is smaller than the upward attractive force when the actuator rod is at its uppermost position; and
in that water is supplied from the water-induction tube into water-supply tube when the actuator rod is elevated by the first means against the downward biasing force and retained at its uppermost position by the attractive force, and in that water supply is blocked off when the actuator rod is returned to its lowermost position by said fourth means and retained in its lowermost position by the downward biasing force.

A water supply valve of an embodiment of the invention can be operated to supply water without the continuous supply of electric power. Accordingly, the electric power consumption by the valve is greatly reduced, and, for example, breaking of fine wires of solenoids, a fire of the solenoids, and other problems due to heat generated by the continuous supply of power to the solenoids during supply can be prevented.

In an embodiment, each of the first and fourth means has a first and second solenoid respectively, the first and second solenoids being enclosed in a cylindrical wall of the valve body and surrounding a first chamber defined within the valve body and interconnected to, and disposed above, the reservoir, the first solenoid of the first means generating a magnetic force by a voltage applied thereto to elevate the actuator rod against the downward biasing force of the third means, and the second solenoid of the fourth means generating a magnetic force by a voltage applied thereto to lower the actuator rod against the upward attractive force of the second means.

Preferably, the second means has a permanent magnet disposed in a second chamber defined within the valve body above the first chamber, and wherein the attractive force of said permanent magnet is variable according to a position of the actuator rod.

In an alternative embodiment, the water supply valve further comprises a first chamber defined within the valve body and interconnected to, and disposed above, the reservoir, and a second chamber defined within the valve body and disposed above and separated from the first chamber, the first means having a first solenoid surrounding the first chamber and enclosed in a cylindrical wall defining the first and second chambers, and the fourth means comprising a second solenoid surrounding the second chamber and enclosed in the cylindrical wall, and a holding rod disposed in the second chamber for up and down movement therein, the first solenoid generating a magnetic force by a voltage applied thereto to elevate the actuator rod against the downward biasing force of the second means, and the second solenoid generating a magnetic force by a voltage applied thereto to elevate the holding rod against the attractive force of the second means which is applied to the holding rod as a downward force to decrease the attractive force applied to the actuator rod.

Preferably, the water supply valve further comprises a second spring disposed on an upper bottom surface of the second chamber to urge the holding rod downward by its elastic biasing force.

For example, in the alternative embodiment, the second means has a permanent magnet disposed on the actuator rod such that the attractive force of the permanent magnet is applied between the actuator rod and the holding rod, and is variable according to a distance therebetween, and wherein the actuator rod is lowered as the holding rod is moved upward against the downward biasing force of the second spring, and against the attractive force between the actuator rod and the holding rod, by a magnetic force generated by applying a voltage to the second solenoid.

In an embodiment, the first and second chambers are separated from each other by a partition wall.

Embodiments of the present invention will hereinafter be described, by way of example, with reference to the accompanying drawings, in which:
Figure 1 is a side sectional view of a water supply valve for a washing machine according to a first embodiment of the present invention;
Figure 2 is a side sectional view of a water supply valve for a washing machine according to a second embodiment of the present invention; and
Figure 3 is a side sectional view of a conventional water supply valve for a washing machine.

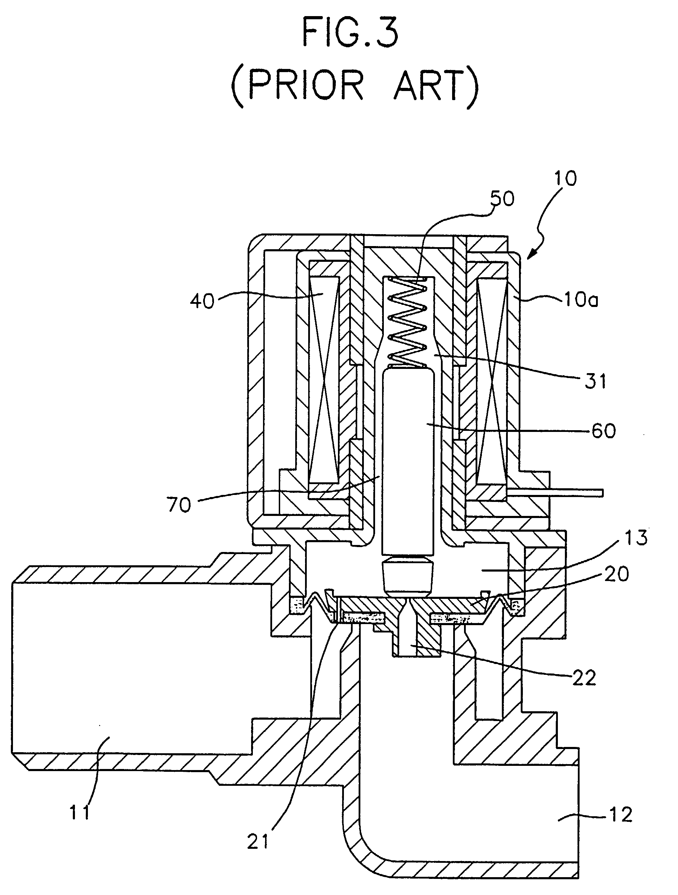

Figure 3 is a side sectional view of a conventional general water supply valve for a washing machine, which is opened or closed by operation of a solenoid to cause water to be supplied into or blocked off from a washing tub of the washing machine.

As shown in Figure 3, a water-introducing tube 11 for introducing water is connected to a valve body 10 of the water-supply valve, and a water supply tube 12 for supplying water into the washing tub is vertically connected to valve body 10 near water-introducing tube 11. A reservoir 13 for interconnecting water-introducing tube 11 and a water-supply tube 12 is defined directly above water-supply tube 12.

A diaphragm or bellows 20 is disposed on the bottom surface of reservoir 13 and is in close contact with water-introducing tube 11 and a water-supply tube 12 to separate reservoir 13 therefrom. Bellows 20 has a water-inflow port 21 formed at an outer portion thereof to interconnect water-introducing tube 11 and reservoir 13 in order for water to flow into reservoir 13 therethrough, and a water-exhaust port 22 at the centre thereof to interconnect reservoir 13 and water-supply tube 12 in order for water having been retained in reservoir 13 to be supplied into the washing tub therethrough.

An actuator chamber 31 interconnected to reservoir 13 is defined above reservoir 13 by a cylindrical wall 10a of valve body 10. A solenoid 40 for generating magnetic force when electric power is supplied is disposed in the cylindrical wall 10a.

An actuator rod 60 for opening/closing the exhaust port is disposed in the actuator chamber 31. The actuator rod 60 is elastically supported on the bottom of actuator chamber 31 by a spring 50.

In the above described conventional water supply valve, when water is not supplied into the washing tub, water-exhaust port 22 is closed so that water is not supplied but retained in reservoir 13, and accordingly the pressure in reservoir 13 is maintained to be the same as that in water-introducing tube 11.

In order to supply water into the washing tub, a voltage is applied to solenoid 40 so as to generate a magnetic force by solenoid 40. Then, actuator rod 60 is moved upward in actuator chamber 31 while compressing spring 50, and accordingly the water having been retained in reservoir 13 is supplied into the washing tub through water-exhaust port 22. Therefore, the pressure in reservoir 13 become lower than that in water-introducing tube 11, so bellows 20 is elevated by the pressure of the water flowing into reservoir 13 from water-introducing tube 11. Then, water-introducing tube 11 is directly interconnected to water-supply tube 12, so that water flows directly from water introducing tube 11 into water-supply tube 12 without passing through water-inflow port and water-exhaust port.

When the voltage having been applied to solenoid 40 is interrupted, actuator rod 60 is restored to its initial position by spring 50, so that the water-exhaust port 22 is closed again.

In the above described conventional water-supply valve, electric power supply to solenoid 40 must be continued while water is supplied into the washing tub, so the electric power consumption is large. Further, fine wires of the solenoid 40 can be broken or the solenoid 40 can catch on fire due to heat generated by the continuous application of voltage to the solenoid 40 during water supply.

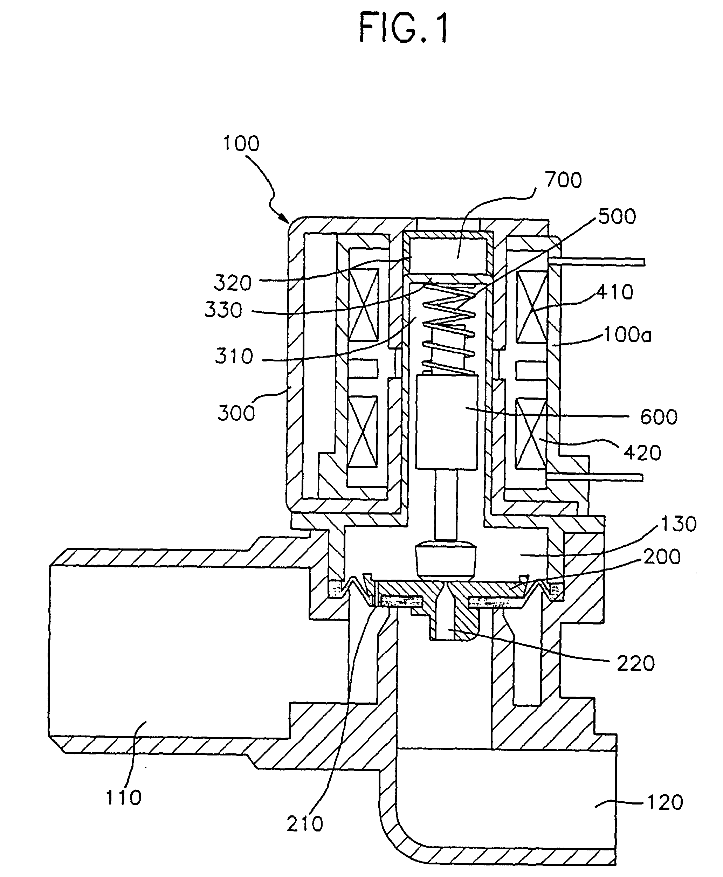

Figure 1 shows a side sectional view of an embodiment of a water supply valve for a washing machine of the present invention. In the valve of Figure 1, a water-introducing tube 110 for introducing water is connected to a valve body 100 of the water supply valve, and a water-supply tube 120 for supplying water into the washing tub is vertically connected to valve body 100 near water-introducing tube 110. A reservoir 130 for interconnecting the water-introducing tube 110 and the water-supply tube 120 is defined directly above the water-supply tube 120.

A bellows or diaphragm 200 is disposed on the bottom surface of the reservoir 130, and is in close contact with the water-introducing tube 110 and the water-supply tube 120 to separate reservoir 130 therefrom. The bellows 200 has a water-inflow port 210 formed at an outer portion thereof to interconnect the water-introducing tube 110 and the reservoir 130 so that water can flow into reservoir 130 from the tube 110. A water-exhaust port 220 is provided at the centre of the bellows 200 to interconnect the reservoir 130 and the water-supply tube 120 so that water retained in the reservoir 130 can be supplied into the washing tub therethrough.

A first chamber 310 interconnected to the reservoir 130 is defined above the reservoir 130 by a cylindrical wall 100a of the valve body 100, and a second chamber 320, separated from the first chamber 310 by a partition wall 330, is defined above the first chamber 310.

A first solenoid 410 and a second solenoid 420 under the first solenoid 410 for generating magnetic force when electric power is supplied thereto are disposed in the cylindrical wall 100a.

An actuator rod 600 for opening/closing the water-exhaust port 220 upon operation of the first and second solenoids 410 and 420 is disposed in the first chamber 310. The actuator rod 600 is elastically supported on the bottom of the first chamber 310 by a first spring 500, and closes the water-exhaust port 220 at its lowermost position. A permanent magnet 700 is disposed in the second chamber 320.

Reference numeral 300 designates a case surrounding the cylindrical wall 100a to protect valve body 100.

Hereinafter, the operation of the water-supply valve having the above construction illustrated in Figure 1 will be described.

When the actuator rod 600 is pushed downward by the first spring 500 so as to block off the water-exhaust port 220, water which had been introduced into the reservoir 130 through the water-introducing tube 110 and water-inflow port 210 cannot be supplied into the water-supply tube 120 through the water-exhaust port 220 but is retained in the reservoir 130. In this case, the pressure in reservoir 130 is maintained to be the same as that in water-introducing tube 110.

When a voltage is applied to the first solenoid 410, automatically by a microcomputer or manually by way of a switch, magnetic force is generated by the first solenoid 410, and the actuator rod 600, which had been retained at its lowermost position by the first spring 500, moves upwardly by virtue of the magnetic force against the action of the first spring 500 which is thereby compressed. Accordingly, the water-exhaust port 220 is opened.

The attractive force between the actuator rod 600 and the permanent magnet 700 in the second chamber 320 is in inverse proportion to the square of the distance therebetween, whilst the downward biasing force of the first spring 500 is constant. Therefore, after the actuator rod 600 passes a position at which the attractive force and the biasing force are equal to each other in the course of moving upward, the actuator rod 600 continues to move upward and then is maintained at its uppermost position against the action of the first spring 500 by virtue of the attractive force of the permanent magnet 700 without the magnetic force of the first solenoid 410.

Thus, the electric power supply to the first solenoid 410 is ceased after the actuator rod 600 passes the position at which the attractive force and the biasing force are equal to each other in the course of moving upward. From this position the actuator rod 600 continues to move upward only by the attractive force between the actuator rod 600 and the permanent magnet 700.

In this case, the electric power supply to the first solenoid 410 can be continued until the actuator rod 600 reaches the uppermost position thereof in order to ensure reliable continuous upward movement of the actuator rod 600.

When the actuator rod 600 is retained at its uppermost position by the permanent magnet 700, the water-exhaust port 220 has been open, and accordingly water which was retained in the reservoir 130 flows through the water-exhaust port 220 into the water-supply tube 120. In this case, the pressure in the reservoir 130 decreases below that in the water-introducing tube 110, so that water in the water-introducing tube 110 pushes up the bellows 200, and thereby the water-introducing tube 110 and the water-supply tube 120 are interconnected with each other. Water is thus directly supplied from the water-introducing tube 110 to the water-supply tube 120 without passing through the water-inflow port 210 and the water-exhaust port 220.

When the supply of water into the washing tub has been completed, electric power is supplied to the second solenoid 420, which is then magnetized, and the actuator rod 600 is lowered by the magnetic force of the second solenoid 420 and the elastic force of the first spring 500 against the attractive force of the permanent magnet 700.

In this case, after the actuator rod 600 passes the position at which the biasing force of the first spring 500 and the attractive force between the permanent magnet 700 and the actuator rod 600 are equal to each other in the course of being lowered, the electric power supply to, and accordingly provision of magnetic force by, the second solenoid 420 can be ceased.

Then, the actuator rod 600 continues to be lowered only by the downward biasing force of the first spring 500 which is greater than the decreasing attractive force between the permanent magnet 700 and the actuator rod 600. The actuator rod 600 pushes the bellows 200 downward while blocking off the water-exhaust port 220.

When the lower surface of the bellows 200 has come to be in close contact with the bottom of the reservoir 130 and the water-exhaust port 220 has been completely blocked by the actuator rod 600 as shown in Figure 1, water supply into the washing tub is interrupted.

If required, and as with the upward movement, the electric power supply to the second solenoid 420 can be continued until the actuator rod 600 reaches its lowermost position in order to ensure reliable continuous downward movement of the actuator rod 600.

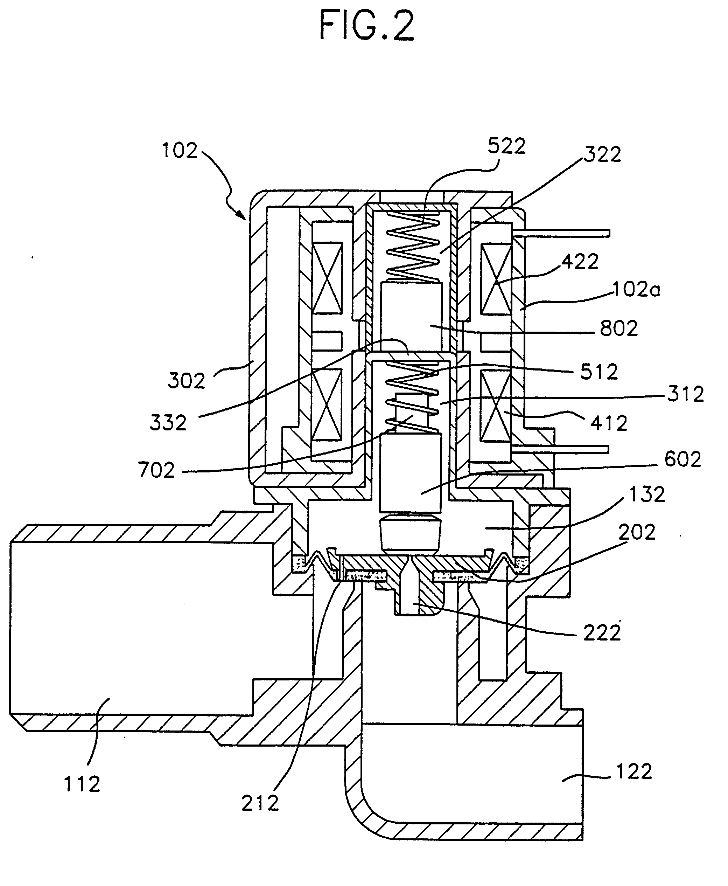

Figure 2 shows a side sectional view of a second embodiment of a water supply valve for a washing machine of the present invention. In the valve of Figure 2, a water-introducing tube 112 for introducing water is connected to a valve body 102 of the water supply valve. A water-supply tube 122 for supplying water into the washing tub is vertically connected to valve body 102 near water-introducing tube 112. A reservoir 132 for interconnecting water-introducing tube 112 and water-supply tube 122 is defined directly above water-supply tube 122.

A bellows or diaphragm 202 is disposed on the bottom surface of the reservoir 132, and is in close contact with the water-introducing tube 112 and the water-supply tube 122 to separate reservoir 132 therefrom. The bellows 202 has a water-inflow port 212 formed at an outer portion thereof to interconnect the water-introducing tube 112 and the reservoir 132 in order for water to flow into the reservoir 132 therethrough. The bellows 202 also has a water-exhaust port 222 at the centre thereof to interconnect the reservoir 132 and the water-supply tube 122 in order for water having been retained in the reservoir 132 to be supplied into the washing tub therethrough.

A first chamber 312 interconnected to the reservoir 132 is defined above the reservoir 132, and a second chamber 322 separated from the first chamber 312 by a partition wall 332 is defined above the first chamber 312, respectively by a cylindrical wall 102a of the valve body 102.

A first solenoid 412 and a second solenoid 422 for generating magnetic force when electric power is supplied respectively surround the first and second chambers 312 and 322 in the cylindrical wall 102a.

An actuator rod 602 for opening/closing the water-exhaust port 222 upon operation of the first solenoid 412 is disposed in the first chamber 312. The actuator rod 602 is elastically supported on the bottom of the first chamber 312 by a first spring 512, and closes the water-exhaust port 222 at its lowermost position. A permanent magnet 702 is disposed on the actuator rod 602.

A holding rod 802 to be elevated upon operation of the second solenoid 422 is disposed in the second chamber 322. The holding rod 802 is elastically supported on the bottom of the second chamber 322 by a second spring 522.

A reference numeral 302 designates a case surrounding the cylindrical wall 102a to protect the valve body 102.

Hereinafter, the operation of the water-supply valve shown in Figure 2 will be described.

When the actuator rod 602 is pushed downward by the first spring 512 so as to block off the water-exhaust port 222, water introduced into the reservoir 132 through the water-introducing tube 112 and the water-inflow port 212 is not supplied into the water-supply tube 122 through the water-exhaust port 222 but is retained in the reservoir 132. In this case, the pressure in the reservoir 132 is maintained to be the same as that in the water-introducing tube 112.

When a voltage is applied to the first solenoid 412, automatically by a microcomputer or manually by way of a switch, magnetic force is generated by the first solenoid 412, and the actuator rod 602, having been retained at its lowermost position by the first spring 512, moves upward by virtue of the magnetic force of the first solenoid 412 against the action of the spring 512 which is thereby compressed. Accordingly, the water-exhaust port 222 is opened.

The attractive force between the holding rod 802 in the second chamber 322 and the permanent magnet 702 attached on the actuator rod 602 is in inverse proportion to the square of the distance therebetween, while the downward biasing force of the first spring 512 is constant. Therefore, after the actuator rod 602 passes a position at which the attractive force and the biasing force are equal to each other in the course of moving upward, the actuator rod 602 continues to move upward and then is maintained at its uppermost position against the action of the spring 512 by virtue of the attractive force between the permanent magnet 702 and the holding rod 802 without the magnetic force of the first solenoid 412.

That is, the electric power supply to the first solenoid 412 is ceased after the actuator rod 602 passes the position at which the attractive force and the biasing force are equal to each other in the course of moving upward, and then the actuator rod 602 continues to move upward only by the attractive force between the holding rod 802 and the permanent magnet 702.

Of course, the electric power supply to the first solenoid 412 can be continued until the actuator rod 602 reaches the uppermost position thereof in order to ensure reliable continuous upward movement of the actuator rod 602.

When the actuator rod 602 is retained at its uppermost position by the attractive force, the water-exhaust port 222 is open, and accordingly water which had been retained in the reservoir 132 flows through the water-exhaust port 222 into the water-supply tube 122. In this case, the pressure in the reservoir 132 decreases below that in the water-introducing tube 112, so that water introduced into the water-introducing tube 112 pushes up the bellows 202. Accordingly, the water-introducing tube 112 and the water-supply tube 122 are directly interconnected with each other, so that water is directly supplied from the water-introducing tube 112 to the water-supply tube 122 without passing through the water-inflow port 212 and the water-exhaust port 222.

When water-supply into the washing tub has been completed, electric power is supplied to the second solenoid 422, which is then magnetized, and the holding rod 802 is moved upward by the magnetic force of the second solenoid 422 against the elastic force of the second spring 522 and the attractive force between the permanent magnet 702 and the holding rod 802.

After the holding rod 802 passes a position at which the biasing force of the second spring 522 and the attractive force between the permanent magnet 702 and the holding rod 802 are equal to each other in the course of moving upward, the electric power supply to, and accordingly the provision of magnetic force by, the second solenoid 422 are ceased.

Because of the upward movement of the holding rod 802, the distance between the holding rod 802 and the permanent magnet 702 increases, and thus the attractive force therebetween deceases. When the distance between the holding rod 802 and the permanent magnet 702 has passed over a threshold value, the attractive force between the holding rod 802 and the permanent magnet 702 becomes smaller than the downward biasing force of the first spring 512. At that time, the actuator rod 602 starts to move down again. The actuator rod 602 pushes the bellows 202 downward and blocks off the water-exhaust port 222 while going down.

When the lower surface of the bellows 202 has come into close contact with the bottom of the reservoir 132, and the water-exhaust port 222 has been completely blocked off by the actuator rod 602 as shown in Figure 2, water supply into the washing tub is interrupted.

When the actuator rod 602 starts to go down again, the electric power supply to the second solenoid 422, and thereby the magnetic force applied to the holding rod 802 by the second solenoid 422, are interrupted, so that the holding rod 802 is returned to its initial position by the downward biasing force of the second spring 522.

In this case, the electric power supply to the second solenoid 422 can be continued until the actuator rod 602 reaches its lowermost position in order to assure reliable continuous downward movement of the actuator rod 602.

As described above in detail, in a water supply valve of the invention, electric power need not be continuously supplied to the water supply valve whilst water is supplied into a washing tub of a washing machine. Rather the open or closed state of the valve is maintained only by an instantaneous power supply to the valve at the moment of supplying water or interrupting the water supply. Therefore, the electric power consumption by the valve is greatly reduced, and the breaking of the fine wires of the solenoid 40 and catching on fire of the solenoid 40 due to heat generated by the continuous supply of power to solenoid 40 during water supply can be prevented. Further, reliable water supply into the washing tub is guaranteed.

Whilst the present invention has been illustrated and described with reference to particular embodiments thereof, it will be understood that various changes in form and detail may be effected without departing from the scope of the invention as defined by the appended claims.

## Claims

1. A water supply valve for a washing machine comprising:
a valve body (100, 102) having a reservoir (130, 132) defined therein;
a water introducing tube (110, 112) interconnected to the reservoir (130, 132) to introduce water thereinto;
a water supply tube (120, 122) having a first end interconnected to the reservoir (130, 132), and a second end for interconnection to a washing machine;
an actuator rod (600, 602) movable up and down in the reservoir (130, 132);
a bellows (200, 202) disposed in the reservoir (130, 132) and movable up and down in the reservoir in accordance with the movement of the actuator rod (600, 602),
first means (410, 412) for elevating the actuator rod (600, 602);
second means (700, 702) for applying a variable upward attractive force to the actuator rod (600, 602); and
third means for applying a constant downward biasing force to the actuator rod (600, 612), characterised
in that said water supply valve further comprises fourth means (420, 422, 802) for lowering the actuator rod (600, 602);
in that said third means (500, 512) applies a constant downward biasing force to the actuator rod (600, 602) which is larger than the upward attractive force when the actuator rod (600, 602) is at its lowermost position, and which is smaller than the upward attractive force when the actuator rod is at its uppermost position; and
in that water is supplied from the water-induction tube (110, 112) into water-supply tube (120, 122) when the actuator rod (600, 602) is elevated by the first means (400, 412) against the downward biasing force and retained at its uppermost position by the attractive force, and in that water supply is blocked off when the actuator rod (600, 602) is returned to its lowermost position by said fourth means (420, 422) and retained in its lowermost position by the downward biasing force.

2. A water supply valve for a washing machine as claimed in Claim 1, wherein the bellows (200, 202) has a water-inflow port (210, 212), and a water-exhaust port (200, 222), the water-inflow port (210, 212) interconnecting the water-induction tube (110, 112) and the reservoir (130, 132), and the water-exhaust port (220, 222) interconnecting the water-supply tube (120, 122) and the reservoir (130, 132), respectively when the bellows (200, 222) is in close contact with a lower bottom surface of the reservoir (130, 132) to separate the reservoir (130, 132) from the water-induction tube (110,112) and the water-supply tube (120, 122).

3. A water supply valve for a washing machine as claimed in Claim 1 or Claim 2, wherein each of the first and fourth means has a first and second solenoid (410, 420) respectively, the first and second solenoids (410, 420) being enclosed in a cylindrical wall (100a) of the valve body (100) and surrounding a first chamber (310) defined within the valve body and interconnected to, and disposed above, the reservoir (130, 132), the first solenoid (410) of the first means generating a magnetic force by a voltage applied thereto to elevate the actuator rod (600) against the downward biasing force of the third means (500), and the second solenoid (420) of the fourth means generating a magnetic force by a voltage applied thereto to lower the actuator rod (600) against the upward attractive force of the second means (700).

4. A water supply valve for a washing machine as claimed in Claim 3, wherein the second means has a permanent magnet (700) disposed in a second chamber (320) defined within the valve body above the first chamber (310), and wherein the attractive force of said permanent magnet is variable according to a position of the actuator rod (600).

5. A water supply valve for a washing machine as claimed in Claim 1 or Claim 2, further comprising a first chamber (312) defined within the valve body (102) and interconnected to, and disposed above, the reservoir (132), and a second chamber (322) defined within the valve body (102) and disposed above and separated from the first chamber (312), the first means having a first solenoid (412) surrounding the first chamber (312) and enclosed in a cylindrical wall (102a) defining the first and second chambers (312, 322), and the fourth means (422, 802) comprising a second solenoid (422) surrounding the second chamber (322) and enclosed in the cylindrical wall (102a), and a holding rod (802) disposed in the second chamber (322) for up and down movement therein, the first solenoid (412) generating a magnetic force by a voltage applied thereto to elevate the actuator rod (602) against the downward biasing force of the second means (512), and the second solenoid (422) generating a magnetic force by a voltage applied thereto to elevate the holding rod (802) against the attractive force of the second means (702) which is applied to the holding rod (802) as a downward force to decrease the attractive force applied to the actuator rod (602).

6. A water supply valve for a washing machine as claimed in Claim 5, further comprising a second spring (522) disposed on an upper bottom surface of the second chamber (322) to urge the holding rod (802) downward by its elastic biasing force.

7. A water supply valve for a washing machine as claimed in Claim 6, wherein the second means has a permanent magnet (702) disposed on the actuator rod (602) such that the attractive force of the permanent magnet is applied between the actuator rod (602) and the holding rod (802), and is variable according to a distance therebetween, and wherein the actuator rod (602) is lowered as the holding rod (802) is moved upward against the downward biasing force of the second spring (522), and against the attractive force between the actuator rod (602) and the holding rod (802), by a magnetic force generated by applying a voltage to the second solenoid (422).

## Patentansprüche

1. Wasserzufuhrventil für eine Waschmaschine, umfassend:
einen Ventilkörper (100, 102) mit einem darin definierten Reservoir (130, 132),
ein Wassereinführungsrohr (110, 112), das mit dem Reservoir (130, 132) verbunden ist, um dort hinein Wasser einzuleiten,
ein Wasserzufuhrrohr (120, 122) mit einem mit dem Reservoir (130, 132) verbundenen ersten Ende und mit einem zweiten Ende zur Verbindung mit einer Waschmaschine,
eine Stellstange (600, 602), die in dem Reservoir (130, 132) auf- und abbewegbar ist,
einen Balg (200, 202), der in dem Reservoir (130, 132) angeordnet und in dem Reservoir in Übereinstimmung mit der Bewegung der Stellstange (600, 602) auf- und abbewegbar ist,
erste Mittel (410, 412) zum Heben der Stellstange (600, 602),
zweite Mittel (700, 702), um eine veränderliche aufwärts gerichtete Anziehungskraft an die Stellstange (600, 602) anzulegen und
dritte Mittel, um eine konstante abwärts gerichtete Vorspannungskraft an die Stellstange (600, 602) anzulegen, dadurch gekennzeichnet,
daß das Wasserzufuhrventil weiterhin vierte Mittel (420, 422, 802) zum Senken der Stellstange (600, 602) aufweist,
daß die dritten Mittel (500, 512) eine konstante abwärts gerichtete Vorspannungskraft an die Stellstange (600, 602) anlegen, die größer ist als die aufwärts gerichtete Anziehungskraft, wenn die Stellstange (600, 602) in ihrer untersten Position ist, und die kleiner ist als die aufwärts gerichtete Anziehungskraft, wenn die Stellstange in ihrer obersten Position ist, und
daß Wasser aus dem Wassereinleitungsrohr (110, 112) in das Wasserzufuhrrohr (120, 122) geliefert wird, wenn die Stellstange (600, 602) von den ersten Mitteln (400, 412) gegen die abwärts gerichtete Vorspannungskraft gehoben wird und in ihrer obersten Position durch die Anziehungskraft zurückgehalten wird, und daß die Wasserzufuhr blockiert wird, wenn die Stellstange (600, 602) in ihre unterste Position von den vierten Mitteln (420, 422) zurückgeführt und in ihrer untersten Position durch die abwärts gerichtete Vorspannungskraft zurückgehalten wird.

2. Wasserzufuhrventil für eine Waschmaschine nach Anspruch 1, bei dem der Balg (200, 202) eine Wassereinströmöffnung (210, 212) und eine Wasserausströmöffnung (200, 222) hat, wobei die Wassereinströmöffnung (210, 212) das Wassereinleitungsrohr (110, 112) und das Reservoir (130, 132) miteinander verbindet bzw. die Wasserausströmöffnung (200, 222) das Wasserzufuhrrohr (120, 122) und das Reservoir (130, 132) miteinander verbindet, wenn der Balg (200, 222) in nahem Kontakt mit einer unteren Bodenfläche des Reservoirs (130, 132) ist, um das Reservoir (130, 132) von dem Wassereinleitungsrohr (110, 112) und dem Wasserzufuhrrohr (120, 122) zu trennen.

3. Wasserzufuhrventil für eine Waschmaschine nach Anspruch 1 oder 2, bei dem jedes der ersten und vierten Mittel einen ersten bzw. einen zweiten Solenoid (410, 420) hat, wobei der erste und zweite Solenoid (410, 420) in einer Zylinderwand (100a) des Ventilkörpers (100) eingeschlossen sind und eine erste Kammer (310) umgeben, die innerhalb des Ventilkörpers definiert und mit dem Revervoir (130, 132) verbunden und oberhalb von diesem angeordnet ist, wobei der erste Solenoid (410) der ersten Mittel durch eine daran angelegte Spannung eine Magnetkraft erzeugt, um die Stellstange (600) gegen die abwärts gerichtete Vorspannungskraft der dritten Mittel (500) zu heben, und wobei der zweite Solenoid (420) der vierten Mittel durch eine daran angelegte Spannung eine Magnetkraft erzeugt, um die Stellstange (600) gegen die aufwärts gerichtete Anziehungskraft der zweiten Mittel (700) zu senken.

4. Wasserzufuhrventil für eine Waschmaschine nach Anspruch 3, bei dem die zweiten Mittel einen Permanentmagneten (700) haben, der in einer zweiten Kammer (320) angeordnet ist, welche innerhalb des Ventilkörpers oberhalb der ersten Kammer (310) definiert ist, und bei dem die Anziehungskraft des Permanentmagneten entsprechend einer Position der Stellstange (600) veränderlich ist.

5. Wasserzufuhrventil für eine Waschmaschine nach Anspruch 1 oder 2, weiter umfassend eine erste Kammer (312), die innerhalb des Ventilkörpers (102) definiert ist und mit dem Reservoir (132) verbunden und oberhalb von diesem angeordnet ist, und eine zweite Kammer (322), die innerhalb des Ventilkörpers (102) definiert ist und oberhalb der ersten Kammer (312) angeordnet und von dieser getrennt ist, wobei die ersten Mittel einen ersten Solenoid (412) haben, der die erste Kammer (312) umgibt und in einer die erste und zweite Kammer (312, 322) definierenden Zylinderwand (102a) eingeschlossen ist, und wobei die vierten Mittel (422, 802) einen zweiten Solenoid (422) haben, der die zweite Kammer (322) umgibt und in der Zylinderwand (102a) eingeschlossen ist, und eine Haltestange (802), die in der zweiten Kammer (322) für eine Auf- und Abbewegung darin angeordnet ist, wobei der erste Solenoid (412) durch eine daran angelegte Spannung eine Magnetkraft erzeugt, um die Stellstange (602) gegen die abwärts gerichtete Vorspannungskraft der zweiten Mittel (512) zu heben, und wobei der zweite Solenoid (422) durch eine daran angelegte Spannung eine Magnetkraft erzeugt, um die Haltestange (802) gegen die Anziehungskraft der zweiten Mittel (702) zu heben, die an die Haltestange (802) als eine Abwärtskraft angelegt wird, um die an die Stellstange (602) angelegte Anziehungskraft zu verringern.

6. Wasserzufuhrventil für eine Waschmaschine nach Anspruch 5, das weiter eine zweite Feder (522) aufweist, die an einer oberen Bodenfläche der zweiten Kammer (322) angeordnet ist, um durch ihre elastische Vorspannungskraft die Haltestange (802) abwärts zu treiben.

7. Wasserzufuhrventil für eine Waschmaschine nach Anspruch 6, bei dem die zweiten Mittel einen Permanentmagneten (702) haben, der an der Stellstange (602) derart angeordnet ist, daß die Anziehungskraft des Permanentmagneten zwischen der Stellstange (602) und der Haltestange (802) angelegt wird und entsprechend einem Abstand zwischen diesen variabel ist, und bei dem die Stellstange (602) gesenkt wird, wenn sich die Haltestange (802) gegen die abwärts gerichtete Vorspannungskraft der zweiten Feder (522) und gegen die Anziehungskraft zwischen der Stellstange (602) und der Haltestange (802) durch eine Magnetkraft hochbewegt, die durch Anlegen einer Spannung an den zweiten Solenoid (422) erzeugt wird.

## Revendications

1. Une soupape d'alimentation en eau, pour une machine à laver, comprenant :
un corps de soupape (100, 102) ayant un réservoir (130, 132) défini en son sein;
un tube d'introduction d'eau (110, 112), interconnecté au réservoir (130, 132) pour y introduire de l'eau;
un tube d'alimentation en eau (120, 122) ayant une première extrémité interconnectée au réservoir (130, 132) et une deuxième extrémité interconnectée à une machine à laver;
une tige d'actionneur (600, 602), déplaçable en levée et en descente dans le réservoir (130, 132);
un soufflet (200, 202) disposé dans le réservoir (130, 132) et déplaçable en levée et en descente dans le réservoir, suivant le déplacement de la tige d'actionneur (600, 602),
des premiers moyens (410, 412), pour élever la tige d'actionneur (600, 602);
des deuxièmes moyens (700, 702), pour appliquer une force d'attraction vers le haut, d'intensité variable, à la tige d'actionneur (600, 602); et
des troisièmes moyens, pour appliquer une force de déplacement en descente, d'intensité constante, à la tige d'actionneur (600, 612), caractérisée
en ce que ladite soupape d'alimentation en eau comprend en outre des quatrièmes moyens (420, 422, 802) pour abaisser la tige d'actionneur (600, 602),
en ce que lesdits troisièmes moyens (500, 512) appliquent une force de déplacement vers le bas à la tige d'actionneur (600, 602), d'intensité constante, qui est d'une intensité supérieure à la force d'attraction vers le haut, lorsque la tige d'actionneur (600, 602) est à sa position la plus basse, et qui est d'intensité inférieure à la force d'attraction vers le haut, lorsque la tige d'actionneur est à sa position la plus haute; et
en ce que de l'eau est fournie depuis le tube d'introduction d'eau (110, 112) dans le tube d'alimentation en eau (120, 122), lorsque la tige d'actionneur (600, 602) est élevée par les premiers moyens (400, 412), à l'encontre de la force de déplacement orientée vers le bas et retenue à sa position la plus haute par la force d'attraction, et en ce que l'alimentation en eau est bloquée lorsque la tige d'actionneur (600, 602) est ramenée à sa position la plus basse par lesdits quatrièmes moyens (420, 422) et retenue à sa position la plus basse, par la force de déplacement orientée vers le bas.

2. Une soupape d'alimentation en eau pour une machine à laver selon la revendication 1, dans laquelle les soufflets (200, 202) ont un orifice d'entrée d'écoulement d'eau (210, 212) et un orifice d'évacuation d'eau (200, 220), l'orifice d'entrée d'écoulement d'eau (210, 212) interconnectant le tube d'introduction d'eau (110, 112) et le réservoir (130, 132), et l'orifice d'évacuation d'eau (220, 222) interconnectant le tube d'alimentation en eau (120, 122) et le réservoir (130, 132), respectivement, lorsque le soufflet (200, 222) est en contact intime avec une surface de fond inférieure du réservoir (130, 132), afin de séparer le réservoir (130, 132) du tube d'introduction d'eau (110, 112) et du tube d'alimentation en eau (120, 122).

3. Une soupape d'alimentation en eau pour une machine à laver selon la revendication 1 ou la revendication 2, dans laquelle chacun des premier et quatrième moyens a un premier et un deuxième solénoïde (410, 420), respectivement, les premier et deuxième solénoïdes (410, 420) étant enclos dans une paroi cylindrique (100a) du corps de soupape (100) et entourant une première chambre (310), définie à l'intérieur du corps de soupape et interconnectée au, et disposée au-dessus du réservoir (130, 132), le premier solénoïde (410) des premiers moyens générant une force magnétique à l'aide d'une tension lui étant appliquée, afin de lever la tige d'actionneur (600), à l'encontre de la force de déplacement orientée vers le bas des troisièmes moyens (500), et le deuxième solénoïde (420) des quatrièmes moyens générant une force magnétique à l'aide d'une tension lui étant appliquée afin d'abaisser la tige d'actionneur (600), à l'encontre de la force d'attraction orientée vers le haut, exercée par les deuxièmes moyens (700).

4. Une soupape d'alimentation en eau pour une machine à laver selon la revendication 3, dans laquelle les deuxièmes moyens ont un aimant permanent (700) disposé dans une deuxième chambre (320), définie à l'intérieur du corps de soupape au-dessus de la première chambre (310), et dans lequel la force d'attraction dudit aimant permanent est variable selon la position de la tige d'actionneur (600).

5. Une soupape d'alimentation en eau pour une machine à laver selon la revendication 1 ou la revendication 2, comprenant en outre une première chambre (312) définie à l'intérieur du corps de soupape (102) et interconnectée au, et disposée au-dessus du, réservoir (132), une deuxième chambre (322) définie à l'intérieur du corps de soupape (102) et disposée au-dessus et séparée de la première chambre (312), les premiers moyens ayant un premier solénoïde (412) entourant la première chambre (312) et enclos dans une paroi cylindrique (102a) définissant les première et deuxième chambres (312, 322) et les quatrièmes moyens (422, 802) comprenant un deuxième solénoïde (422) entourant la deuxième chambre (322) et enclos dans la paroi cylindrique (102a), et une tige de maintien (802) disposée dans la deuxième chambre (322) pour y effectuer un mouvement en levée et en descente, le premier solénoïde (412) générant une force magnétique par une tension lui étant appliquée, afin d'élever la tige d'actionneur (602) à l'encontre de la force de déplacement, exercée vers le bas, des deuxièmes moyens (512), et le deuxième solénoïde (422) générant une force magnétique à l'aide d'une tension lui étant appliquée, pour élever la tige de maintien (802) à l'encontre de la force d'attraction exercée par les deuxièmes moyens (702), appliquée à la tige de maintien (802) sous forme de force orientée vers le bas, afin de diminuer la force d'attraction appliquée à la tige d'actionneur (602).

6. Une soupape d'alimentation en eau pour une machine à laver selon la revendication 5, comprenant en outre un deuxième ressort (522), disposé sur une surface de fond supérieure de la deuxième chambre (622), afin de déplacer vers le bas la tige de maintien (802), par l'effet de sa force de déplacement élastique.

7. Une soupape d'alimentation en eau pour une machine à laver selon la revendication 6, dans laquelle les deuxièmes moyens ont un aimant permanent (702) disposé sur la tige d'actionneur (602), de manière que la force d'attraction de l'aimant permanent soit appliquée entre la tige d'actionneur (602) et la tige de maintien (802) et soit d'intensité variable, en fonction de la distance entre elles, et dans laquelle la tige d'actionneur (602) est abaissée lorsque la tige de maintien (802) est levée à l'encontre de la force de déplacement vers le bas du deuxième ressort (522), et à l'encontre de la force d'attraction exercée entre la tige d'actionneur (602) et la tige de maintien (802), par une force magnétique générée par application d'une tension au deuxième solénoïde (422).
